# EUROPÄISCHE PATENTANMELDUNG

(11) **EP 1 307 017 A1**
(43) Veröffentlichungstag der Anmeldung: **02.05.2003**
(21) Anmeldenummer: 01125257.4
(22) Anmeldetag: 24.10.2001
(51) Int. Cl.: H04L 29/06, H04L 12/28, H04L 12/14

(54) **Verfahren und Vorrichtung zum authentisierten Zugriff auf lokale Funk-Datennetze**

(71) Anmelder: SIEMENS AKTIENGESELLSCHAFT, 80333 München (DE)
(72) Erfinder: Morper, Hans-Jochen, 85253 Erdweg (DE)

(57) **Zusammenfassung**

Die Erfindung bezieht sich auf Verfahren, Vorrichtungen und Systeme zum authentisierten Zugriff durch eine zu einem Datennetz (WLAN) kompatible Station (WH) auf ein Datennetz, welche eine Authentizität der Station bzw. deren Benutzers ermöglichen. Dazu wird eine Einrichtung, z.B. ein Mobilfunkgerät verwendet, die in einem anderen System authentisiert ist. Neben einer Authentisierung wird dadurch insbesondere auch eine Vergebührung von Diensten in einem Datennetz oder einem anderen über das Datennetz zugreifbaren Kommunikationssystem (GSM) möglich.

## Beschreibung

Die Erfindung bezieht sich auf ein Verfahren zum Zugriff auf ein Datennetz bzw. Vorrichtungen zum Durchführen eines solchen Verfahrens mit den oberbegrifflichen Merkmalen des Patentanspruchs 9. Ferner bezieht sich die Erfindung auf ein durch die Authentisierung mögliches Vergebührungsverfahren.

Zur Kommunikation bzw. zur Übertragung von Daten ist eine Vielzahl verschiedenartigster Telekommunikations- und Datennetze bekannt. Dabei ist zwischen zwei grundsätzlich verschiedenen Netztypen zu unterscheiden. Einerseits gibt es die Telekommunikationsnetze, beispielsweise gemäß dem Standard GSM (Global System for Mobile Telecommunications) oder dem UMTS (Universal Mobile Telecommunications System), bei denen Teilnehmer beim Einbuchen in das entsprechende Netz authentisiert und autorisiert werden. Vorteilhaft an derartigen Netzen ist, dass durch die Authentisierung auch eine Vergebührung von beanspruchten Diensten möglich ist. Weiterhin bieten diese in der Regel zellularen Netze die Möglichkeit einer hohen Mobilität, da sich ein Teilnehmer mit seiner Station von Netzzelle zu Netzzelle bewegen kann. Nachteilhaft ist bei derartigen zellularen Telekommunikationssystemen, dass der Verwaltungsaufwand sehr hoch ist. Außerdem stellen diese Telekommunikationsnetze den Funkschnittstellen zur teilnehmerseitigen Station nur eine niedrige Datenrate zur Verfügung.

Andererseits gibt es Datennetze, die als lokale Datennetze bzw. lokale Funk-Datennetze (WLAN: Wireless Local Area Network) ausgestaltet sind. Derartige Datennetze bieten für teilnehmerseitige Stationen einen verwaltungstechnisch sehr einfachen Zugang. Ein weiterer Vorteil besteht in der im Vergleich zu Telekommunikationsnetzen erheblich höheren Datenrate auf den Schnittstellen zur teilnehmerseitigen Station. Nachteilhaft bei derartigen Datennetzen ist jedoch die fehlende Authentisierungsmöglichkeit und somit auch eine fehlende Abrechnungs- bzw. Vergebührungsmöglichkeit.

Als lokale Datennetze mit funk-basiertem Teilnehmerzugang scheinen sich derzeit vor allem in den USA und Europa fast ausschließlich Produkte auf Basis der IEEE 802.11-Familie durchzusetzen, wobei entsprechende Ethernet-Anschlüsse bereits in vielen Computern und tragbaren Computern (Laptop, Notebook, PDA, ...) standardmäßig bereitgestellt werden. Die gemäß IEEE 802.11b-Standard definierte Funkschnittstelle zum Zugriff auf lokale Datennetze entspricht funktional einem verdrahteten Anschluss an lokale Datennetze (LAN), die sich heutzutage zum Standard in Büros entwickelt haben.
Schnittstellen-Karten für funkgestützte Zugriffe auf lokale Datennetze, die auch als NICs (Network Interface Cards) bezeichnet werden, sind aus architektureller Sicht wie standardisierte Ethernet-Karten gefertigt und mit den heutigen Betriebssystemen per sogenanntem Plug & Play einzusetzen. Tragbare Computer sind mit entsprechenden Schnittstellenkarten problemlos nachrüstbar, sofern sie nicht bereits ab Werk mit einem integrierten Anschluss für einen verdrahteten oder funkgestützten Zugriff auf lokale Datennetze ausgeliefert werden. Bei den nächsten Betriebssystemgenerationen (z. B. Windows XP von Microsoft), wird eine voll integrierte Unterstützung von lokalen Funk-Datennetzen bereitgestellt.

Mit Datenraten von derzeit 11 Mbit/s und zukünftig 50 Mbit/s stehen damit Teilnehmern Datenraten zur Verfügung, die erheblich höher liegen, als die Datenraten, die von der nächsten, dritten Mobilfunkgeneration (UMTS) angeboten werden können. Damit ist für die Übertragung von großen Datenmengen, insbesondere in Verbindung mit Internetzugriffen der Zugriff auf funkgestützte lokale Datennetze für hochbitratige Verbindungen zu bevorzugen.

Nachteilhafter Weise können die funkgestützten lokalen Datennetze keine Authentisierungsmöglichkeit für nicht bereits im System registrierte Stationen bzw. Computer bieten. Betreiber von funkgestützten lokalen Datennetzen müssen jedoch beispielsweise in einem Flughafenbereich den Zugriff für eine Vielzahl unterschiedlichster Teilnehmer aus unterschiedlichsten Regionen bieten. Um einen Teilnehmer authentisieren zu können, müsste der Betreiber des funkgestützten lokalen Datennetzes sogenannte Cross-License-Agreements mit allen möglichen Internet-Diensteanbietern (ISP: Internet Service Providern) abschließen, wovon es jedoch allein in Deutschland derzeit über 60.000 gibt.

Ohne eine Authentisierung von Teilnehmern bzw. teilnehmerseitigen Stationen kann jedoch auch keine Abrechnung von beanspruchten Diensten erfolgen, da bereits unbekannt ist, an wen eine Rechnung gesendet werden könnte. Ein Zugriff auf lokale funkgestützte Datennetze muss daher entweder gebührenfrei oder mit Vorausbezahlung als sogenannter Prepaid-Dienst über eine Kreditkartenabrechnung oder dergleichen angeboten werden.

Eine weitere Möglichkeit, Authentisierung und Abrechnung zu ermöglichen, besteht darin, ein Abrechnungsunternehmen bzw. sogenanntes Clearinghouse zwischenzuschalten, welches die entsprechenden Kontakte zu möglichst vielen Internet-Diensteanbietern weltweit übernimmt. Problematisch dabei ist jedoch, dass dann ein Großteil der Einnahmen des Betreibers eines funkgestützten lokalen Datennetzes an das Clearinghouse abzuführen ist. Weiterhin muss es dem Clearinghouse gelingen, auch tatsächlich jeden bzw. zumindest eine Vielzahl der Internet-Diensteanbieter adressieren zu können, also selber eine Vielzahl von Verträgen zu schließen. Damit ist auch diese Lösung sehr schlecht handhabbar. Mit Blick auf den unauthentisierten Zugriff auf Datennetze besteht zunehmend auch das Problem, dass unauthentisierter Inhalt bzw. sogenannter Unauthorized Content von Teilnehmern funkgestützter lokaler Datennetze bereitgestellt wird. Nur durch Authentisierung könnte verhindert werden, dass extremistische oder jugendgefährdende Informationen über die entsprechenden lokalen Datennetze und Internetzugriffe abgerufen werden können.

Bei den Betreibern der vorstehend beschriebenen Mobilfunknetzen sind diese Probleme in einfacher Art und Weise lösbar. Die zellularen Mobilfunknetze verfügen über eine große Teilnehmerschaft, die authentisierbar ist. Weiterhin verfügen diese Mobilfunknetze über ein Abrechnungs- bzw. Billing-System. Über ein sogenanntes internationales Roaming können auch Teilnehmer bedient und authentisiert werden, die bei einem anderen Mobilfunkbetreiber registriert bzw. subskribiert sind. Da heutzutage ein Großteil der Verbraucher in Industrieländern Mobilfunkteilnehmer sind, kann ein Mobilfunkbetreiber im Prinzip nahezu jeden Verbraucher selber oder mit Hilfe anderer Mobilfunkbetreiber adressieren.

Ansätze, wie ein Mobilfunkbetreiber ein funkgestütztes lokales Datennetz in sein eigenes zellulares Mobilfunknetz integrieren kann, sind vielfältig. Bei dem derzeitigen Diskussionsstand wird grundsätzlich zwischen fester und loser Kopplung (Tight and Loose Coupling) unterschieden. Unter fester Kopplung wird die vollständige UMTS-Integration verstanden, d.h. man benutzt nur die physikalische Schicht (Layer) des funkgestützten lokalen Datennetzes, während ansonsten alle höheren Protokollschichten vom UMTS übernommen und angepasst werden. Diese Lösung wird mittlerweile nicht mehr diskutiert, da sie sich als wirtschaftlich nicht sinnvoll und technisch schwer realisierbar erwiesen hat.

Bei den losen Kopplungsvarianten sind zur Zeit die beiden infrastrukturbasierten Kopplungsvarianten in der öffentlichen Diskussion (z. B. ETSI BRAN), die auf der Verwendung einer registrierten Identifizierungskarte (SIM: Subscriber Identification Module) bzw. dem RADIUS-PROTOKOLL (RADIUS: Remote Access Dial-In User Access) beruhen. Bei der SIMbasierten Variante wird in ein Notebook oder eine Netzzugangskarte für dieses eine sogenannte SIM-Karte eingesetzt. Das lokale funkgestützte Datennetz-System erscheint logisch als lokales Besucherregister (VLR: Visitor Local Register) des Telekommunikationsnetzes und wird über das sogenannte MAP (Mobile Application Part) an das Telekommunikationsnetz angebunden. Ein wirtschaftlicher Erfolg für den Betreiber des Telekommunikationsnetzes hängt jedoch stark davon ab, ob zukünftig jede Karte für Zugriffe auf funkgestützte lokale Datennetze standardmäßig eine SIM-Karte beinhalten wird. Hierzu müssten Computerhersteller sowie die Standardisierungsgremien für Datennetze und Telekommunikationsnetze gemeinsame Standards entwickeln oder ein Mobilfunkbetreiber müsste diese spezielle Art von NICs subventionieren.

Bei der RADIUS-Variante erscheint das Telekommunikationsnetz als Authentisierungs-, Autorisierungs- und Abrechnungs-Server, wodurch eine Modifikation der Teilnehmerausstattung nicht erforderlich ist.

Mit Blick auf die derzeit verfügbare Hardware sind Zugriffspunkte (AP: Access Points), welche auf dem Standard IEEE 802.11b beruhen, als analoge Modems zum Anschluss an eine Telefonleitung, als ISDN-Karten zum Anschluss an einen So-Bus, als DSL-Modems zum Anschluss an eine DSL-Leitung, topologisch als Ethernet-Brücken mit einem lokalen Datennetz-Anschluss zum Anschluss an ein lokales Datennetz und in weiteren Ausführungen als sogenanntes Kabelmodem zum Anschluss an ein Kabel-Fernsehnetz und als Router, beispielsweise mit Ethernet-Anschluss ohne Brückenfunktion bekannt. Diese Zugriffspunkte bestehen dabei aus einem Funkzugriffsabschnitt zur Steuerung des Zugriffs auf die Funkschnittstelle und einer Schnittstelle zum Anschluss an das verdrahtete Telekommunikations- oder Datennetz. Der Funkzugriffsabschnitt und die Schnittstelle für den leitungsgebundenen Anschluss sind mit einer Hardware verbunden, die auch entsprechende Konfigurationsmanagementfunktionen usw. bereitstellt.

Die Aufgabe der Erfindung besteht darin, ein Verfahren und Vorrichtungen zum authentisierten Zugriff auf lokale Datennetze, insbesondere lokale Funk-Datennetze bereitzustellen, welche die Authentisierung vereinfachen und insbesondere die Möglichkeit zur Vergebührung von mit Hilfe des lokalen Funknutzes in Anspruch genommenen Diensten erleichtern.

Diese Aufgabe wird durch ein Verfahren zum authentisierten Zugriff auf lokale Datennetze mit den Merkmalen des Patentanspruchs 1, ein Vergebührungsverfahren für datennetzkompatible Stationen mit den Merkmalen des Patentanspruchs 6, eine Datennetzvorrichtung mit den Merkmalen des Patentanspruchs 10, eine Netzzugriffseinrichtung mit den Merkmalen des Patentanspruchs 11 bzw. Vergebührungssysteme mit den Merkmalen des Anspruchs 17 gelöst.

Vorteilhafte Ausgestaltungen sind Gegenstand abhängiger und nebengeordneter Ansprüche.

Unter einem authentisierten Zugriff ist insbesondere ein Zugriff auf ein Datennetz, Daten oder dergleichen zu verstehen, bei denen die zugreifende Station oder deren Betreiber direkt oder indirekt identifizierbar sind. Datennetze sind insbesondere lokale Datennetze gemäß z.B. Ethernet, IEEE 802.11 oder HiperLAN2. Datennetz-kompatible Station sind entsprechend Computer, Notebooks und dergleichen, die eine kabel- oder funk-gestützte Schnittstelle zu einem solchen Datennetz aufweisen. Für den Zugriff dienen Zugriffspunkte für ein derartiges Datennetz, worunter Hubs, Brücken, Netzkarten in Computern und dergleichen zu verstehen sind.

Die Identifizierungsinformation kann eine Gerätenummer, eine zugewiesene Telefonnummer, eine passwortartige Zeichenfolge und dergleichen sein, die der Station oder deren Betreiber zugeordnet sind. Die Kenninformation, z.B. ein Passwort, wird hingegen durch die die Authentisierung einleitende Datennetzeinrichtung bereitgestellt. Als gegenüber Manipulationen geschützter Weg zu einer authentisierten Einrichtung wird der Übermittlungsweg einer Kurznachricht, eines Anrufs oder dergleichen beispielhaft aufgeführt. Die Übertragung der Kenninformation zum Zugriffspunkt bzw. Datennetz kann z.B. durch Ablesen von einem Mobilfunktelefondisplay, Fax oder dergleichen durch Personen aber auch automatisch durch Infrarotschnittstellen oder Kabelverbindungen erfolgen.

Zur Feststellung der Authentizität eines Teilnehmers bzw. einer teilnehmerseitigen Station ist ein Verfahren besonders vorteilhaft, bei dem seitens des Datennetzes eine Kenninformation über einen sicheren Weg zu einer Datennetz-externen Einrichtung eines Systems mit Authentisierung der Teilnehmer bzw. Teilnehmerstationen übermittelt wird. Der Teilnehmer kann die auf einer solchen Einrichtung empfangene Kenninformation per Hand nach Anzeige auf einem Display oder per automatischer Schnittstelle, z.B. über eine Kabelverbindung oder eine Infrarotverbindung auf den mobilen Host bzw. Rechner übertragen. Dadurch kann einerseits auf sichere Authentisierungsinformationen eines anderen Systems zugegriffen werden, von dem zumindest die Zugriffskennung der eindeutig zuordbaren Einrichtung des Systems mit Authentisierung im Datennetz bekannt ist. In vorteilhafter Weise muss jedoch nicht direkt mit weiteren netzinternen Einrichtungen des anderen Systems mit der Authentisierungsfunktion zugegriffen werden. Das Datennetz und das andere Systeme mit Authentisierungsfunktion bleiben somit vollständig entkoppelt und ermöglichen trotzdem eine sichere Authentisierung des mobilen Host bzw. der Station, mit der auf das Datennetz zugegriffen wird, da die Bedienung dieser Station nur durch einen im anderen System eindeutig authentisierbaren Teilnehmer durchgeführt werden kann.

In zweckmäßiger Weise wird die Kenninformation im Zugriffspunkt des Datennetzes oder einer sonstigen Einrichtung des Datennetzes aus dem verfügbaren Standardzeichensatz zufällig erzeugt. Möglich ist aber auch die Auswahl einer Kenninformation aus einer Liste mit einer großen Vielzahl von Passworten, so dass zur Vereinfachung der Übertragung Worte des üblichen Sprachschatzes der Anwender verwendet werden können.

Die Übertragung der Kenninformation auf die Einrichtung des Systems mit Authentisierung kann besonders einfach durch Verwendung des Kurznachrichtendienstes (SMS: Short Message System) vorgenommen werden. Diese Vorgehensweise ist bei den derzeitigen und zukünftigen zellularen Telekommunikationssystemen mit einer sehr großen Verbreitung in den relevanten Anwenderkreisen für Datennetzzugriffe einfach umsetzbar. Unter der Übertragung der Kenninformation ohne eine direkte Ausnutzung von Authentisierungsfunktionen in dem Datennetz-externen System wird somit vorzugsweise verstanden, dass der Betreiber dieses fremden Netzes lediglich eine Datenübertragung vergleichbar einem normalen Telefonanruf oder einer Kurznachrichtübermittlung ermöglichen muss.

In vorteilhafter Weise erfolgt die Übertragung der Kenninformation ohne eine direkte Ausnutzung von den eigentlichen Authentisierungsfunktionen in dem Datennetz-externen System.9 Eine direkte Kommunikation mit einer oder mehreren der Einrichtungen und Funktionen des externen Systems ist nicht erforderlich.

Dabei ist es besonders vorteilhaft, die Kenninformation über eine Mobilstation und/oder eine SIM-Karte eines zellularen Mobilfunksystems zu übertragen.

Nach der Authentisierung des Teilnehmers bzw. der auf das Datennetz zugreifenden Station kann im Datennetz selber eine Erfassung von vergebührungsrelevanten Daten beim Zugriff der Station über das Datennetz auf einen bestimmten Dienst oder über eine bestimmte Zeitdauer vorgenommen werden. Zweckmäßiger Weise können derartig erfasste vergebührungsrelevante Daten gemäß einem Verfahren mit eigenständiger erfinderischer Ausgestaltung an eine separate Vergebührungszentrale oder ein Vergebührungszentrum des datennetzexternen Systems durchgeführt werden.

Derartige Verfahren sind insbesondere mit einem lokalen Datennetz oder funkgestützten lokalen Datennetz durchführbar, wenn dieses neben einer Schnittstelle für den Zugriff durch eine teilnehmerseitige Station, einer Zugriffssteuereinrichtung mit zweckmäßigerweise einem Authentisierungsspeicher und einer ersten Schnittstelle für einen Zugriff vom Datennetz auf ein externes Netz zusätzlich eine spezielle Zugriffssteuereinrichtung zum Erzeugen einer Kenninformation und Aussenden dieser Kenninformation über das externe Netz ausgestattet ist. Über eine zweite Netzeinrichtungsschnittstelle kann die Kenninformation vom externen Netz auf die an das Datennetz angeschlossene Station übertragen werden, womit zugleich die Authentisierung der Station durch die Zugriffssteuereinrichtung ermöglicht wird.

Zum Durchführen eines solchen Verfahrens in einem derartig ausgestatteten Datennetz bieten sich insbesondere Modems oder Netzzugriffseinrichtungen an, die über entsprechende Schnittstellen zu dem Datennetz, z. B. einen Ethernet-Anschluss, und an das externe Netz, z. B. eine Telefonleitung sowie entsprechende Hardware und Software zum Durchführen einer entsprechenden Authentisierung aufweisen.

Zweckmäßiger Weise weist eine solche Zugriffssteuereinrichtung alle für die Authentisierung erforderlichen Einrichtungen und Funktionen sowie ein Schnittstellenmodul auf, wobei das Schnittstellenmodul als modulare Einrichtung zum Anschluss an zumindest ein fremdes Kommunikationssystem oder Kommunikationsnetz mit sicherer Authentisierung ausgelegt ist, so dass durch einen Austausch des Schnittstellenmoduls eine Anpassung an verschiedenartigste externe Netze ohne großen baulichen Aufwand möglich ist.

In dem anderen, externen Kommunikationssystem bzw. Kommunikationsnetz mit Authentisierungsfunktion sind geringe bzw. keine Änderungen erforderlich. Da bezüglich der Authentisierung einer auf ein lokales Funk-Datennetz zugreifenden Teilnehmerstation dieses lediglich zum Transport authentisierungsrelevanter Informationen genutzt wird, fallen bezüglich der Teilnehmerauthentisierung in diesem externen Netz keine zusätzlichen Aufwände an. Die Übertragung von Vergebührungsinformationen von einer Zugriffssteuereinrichtung eines lokalen Funk-Datennetzes an ein anderes, externes Kommunikationssystem erfolgt sinnvollerweise in dem Format und über die Schnittstellen, die für die Übertragung vergebührungsrelevanter Informationen innerhalb dieses Netzes oder an dieses Netz üblich sind.

Anpassungen an unterschiedlichste Payment-Systeme können entweder im externen Netz oder aber im lokalen funkbasierten Datennetz erfolgen.

Die Umsetzung dieses Verfahrens bzw. die Einführung entsprechender technischer Einrichtungen ist mit minimalem Aufwand möglich. Insbesondere können auch kleinste lokale Datennetze bzw. lokale Funk-Datennetze einbezogen werden, so dass die Summe vieler Klein- und Kleinstinstallationen ein Gesamtnetz ausbilden, auf das potentielle Funk-Datennetz-Kunden zugreifen können. In derartigen Szenarien ist kein Hauptbetreiber erforderlich, der ein großes finanzielles Risiko eingeht, und die Investitionen der einzelnen Zugriffsanbieter, beispielsweise Friseursalons, Gaststätten, Flughafenbetreiber sind aufgrund der einfachen Umsetzbarkeit gering. Insbesondere ermöglicht dies auch Mobilfunkbetreibern den Zugang zu derartigen Märkten, wobei die Mobilfunkbetreiber selber entsprechende Datennetzzugänge bereitstellen können oder die Datennetzzugänge Dritter für sich nutzbar machen können.

Im wesentlichen wird bei der Installation auf einfache handelsübliche Massenware zurückgegriffen, die von den Inhabern tragbarer Computer und dergleichen mit geringen Kosten erworben werden können. Aufgrund der nur geringen erforderlichen Zusatzfunktionen und Zusatzeinrichtungen bei den Datennetz-Zugriffspunkten sind auch die Installationskosten seitens des Datennetzbetreibers gering und mit weniger als 500 Euro zuzüglich monatlicher Internet-Zugriffsgebühren tragbar. Selbst wenn keine Vergebührung vorgenommen wird, ist der Einsatz eines solchen Systems mit Blick auf die mögliche Kundenbindung zweckmäßig.

Vergebührunsverfahren sind besonders gut auf verschiedene Systeme aufteilbar, wenn in einer ersten, kostengünstig bereitstellbaren Vergebührungseinrichtung Vergebührungsgrundinformationen erfasst und an eine zweite, kostenintensiver aber dafür zentral betreibbaren Vergebührungseinrichtung übermittelt werden, welche aus den Vergebührungsgrundinformationen zu verrechnende Gebühren bestimmt.

Einsatzbereiche sind aufgrund der Verwendung des unlizenzierten Funkbandes private Grundstücke, Geschäfte und Unternehmensbereiche.

Während bei bekannten Systemen eine vorherige Registrierung und im Fall von Vergebührungen die Einschaltung von Vergebührungsunternehmen oder Instanzen erforderlich war, können mit dem vorgestellten Verfahren Authentisierungen und damit eindeutige Teilnehmeridentifikationen durchgeführt werden, wenn das Datennetz auf ein anderes System oder Netz mit den entsprechenden Informationen zugreifen kann. Insbesondere kann damit auch die Urheberschaft von Inhalten im Netz überprüft werden.

Der Zugriff auf zellulare Telekommunikationsnetze ist besonders vorteilhaft, da die Mobilfunkbetreiber über die derzeit weltweit größte Teilnehmerschaft verfügen, die derzeit weltweit akzeptierteste Form der Teilnehmerauthentifizierung anwenden und mit ihrer Vergebührungsplattform über ein einfaches Inkassosystem für Dritte verfügen.

Ein weiteres, vorteilhaftes Merkmal besteht darin, dass, obwohl der Mobilfunkbetreiber selbst die Verantwortung der Zugangsauthentisierung von Teilnehmern und Teilnehmergeräten vollständig an einen dritten Diensteanbieter übertragen hat, er darüber hinaus mit z.B. Modems oder Netzzugangseinrichtungen genau die Mechanismen bereitstellen kann, die es diesem Diensteanbieter auf einfachste Weise ermöglichen, diese Authentisierung sicher und verläßlich durchzuführen.

Hardwareseitig die entsprechenden Einrichtungen in Form eines Modems bereitzustellen, ist besonders vorteilhaft, da ein Teilnehmer lediglich einfache Verbindungen vorzunehmen hat und die Einrichtung wie ein übliches Modem für Telekommunikationsnetzzugriffe einfach und ohne großen technischen Aufwand selber installieren kann.

Besondere Vorteile liegen somit darin, dass zwei verschiedenartige Netze sich gegenseitig ergänzen, in dem ein hochbitratiges Datennetz indirekt auf Funktionen eines niedrigbitratigen Telekommunikationsnetzes mit Authentisierungsfunktionen zugreifen kann. Ein Datennetz, insbesondere Funk-Datennetz kann somit autonom eine Authentisierung einer teilnehmerseitigen Station vornehmen und dazu an unterschiedlichste Netze angeschlossen werden. Das Anschließen an fremde Netze kann dabei derart erfolgen, dass aus Sicht des fremden Netzes eine netzeigene Station zugreift oder eine fremde Einrichtung auf eine für diese bereitgestellte Standardschnittstelle zugreift.

Mobilfunkbetreiber können dritten Datennetzanbietern den Anschluss an ihr Bezahlungssystem anbieten und so mit minimalem Aufwand ihren Mobilfunkkunden auch einen Zugriff auf lokale Datennetze anbieten, ohne dabei gezwungen zu sein, selber Zugriffspunkte für Datennetze aufzustellen.

In diesem Zusammenhang ist der Anschluß von Zugriffssteuereinrichtungen lokaler Funk-Datennetze an sogenannte Vergebührungs- bzw. Payment-Systeme von Vorteil. Diese Systeme finden in Telekommunikations-, vor allem aber in zellularen Mobilfunknetzen dann Anwendung, wenn eine Vergebührungsinformation von netzfremden Diensteanbietern übertagen werden soll. So ist es z.B. möglich, den Erwerb von Artikeln über das Mobilfunknetz abzurechnen. In einem solchen Falle nutzt der Verkäufer von Artikeln die Teilnehmerschaft des Kunden bei einem Mobilfunkbetreiber, so dass der Käufer nun, an Stelle von z.B. einer Kreditkarte, über seinen Mobilfunkbetreiber abrechnen kann. Der Verkäufer nutzt also die Inkasso Funktionen, die Mobilfunkbetreiber dritten Diensteanbietern zur Verfügung stellen. Dabei steht der Verkäufer gegenüber dem Mobilfunkbetreiber in der Pflicht, zu gewährleisten, dass nur Vergebührungsinformationen von vollständig authentisierten Teilnehmern übermittelt werden. Entsprechendes kann z.B. in einem Vertrag so geregelt werden, dass der Inanspruch-Nehmer (Verkäufer) von Vergebührungsdienstleistungen eines Mobilfunkbetreibers grundsätzlich für die in Anspruch genommenen Geldbeträge haftet. Über diese in anderen Bereichen für sich bekannten Verfahren, die in kommerziellen Payment-Systemen Anwendung finden, z.B. dem Siemens Pay@Once System, ist es einem Mobilfunkbetreiber möglich, gebührenpflichtige Dienste nicht nur selbst anzubieten, sondern seinen Mobilfunkkunden zusätzlich Dienste von Dritten, nicht dem Mobilfunkbetreiber gehörenden Gesellschaften (untrusted partners)anzubieten zu lassen.

Ein wesentlicher Vorteil des beschriebenen Verfahrens besteht darin, daß der gebührenpflichtige Zugang zu einem lokalen Funknetz von Dritten angeboten werden kann, deren Vergebührung über das Mobilfunknetz erfolgt, ohne dass der Mobilfunkbetreiber selbst die für den funkbasierten lokalen Funknetzzugang notwendigen Vorrichtungen wie Basisstationen bereitstellen muß.

Ein Mobilfunkbetreiber kann also seinem Kunden selbst dort einen Zugriff auf Datennetze verschaffen, wo dieser Dienst bereits von einem anderen, Dritten angeboten wird. Dem Dritten kann er die erforderlichen Einrichtungen und Funktionen verkaufen oder schenken.

Dritte Betreiber, z. B. Content-Provider, können motiviert werden, selber einen Zugriff auf lokale Datennetze anzubieten, da diese dritten Betreiber die Möglichkeit der Authentisierung und des Inkassos eines Mobilfunknetzes auf einfache Art und Weise nutzen können.

Für die Authentisierung des Datennetzbetreibers gegenüber einem Dritten als Vergebührungszentrum oder dergleichen kann zweckmäßigerweise eine eigenständige Authentisierung verwendet werden.

Ein Ausführungsbeispiel wird nachfolgend anhand der Zeichnung näher erläutert. Es zeigen:
- Fig. 1: schematisch Komponenten eines Datennetzes mit Zugriffsmöglichkeit auf ein fremdes, authentisierungsfähiges Kommunikationssystem;
- Fig. 2: schematisch den Ablauf eines Authentisierungsverfahrens in einem solchen System;
- Fig. 3: ein Ablaufdiagramm für ein solches Verfahren;
- Fig.4: eine Anordnung zur Vergebührung und
- Fig. 5: einen modularen Funk-Zugriffspunkt.

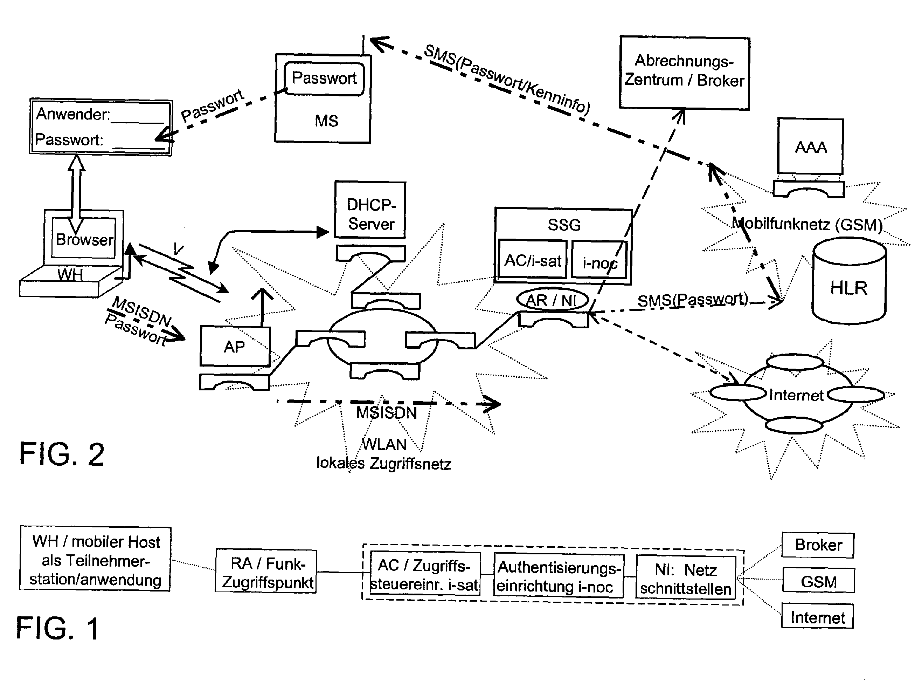

Wie aus Fig. 1 ersichtlich, besteht ein beispielhaftes lokales Datennetz, im bevorzugten Ausführungsbeispiel lokales Funk-Datennetz WLAN (Wireless Local Area Network) aus einer Vielzahl von Einrichtungen, die mit entsprechenden Leitungen untereinander verbunden sind. Zu den Einrichtungen gehören Router und Brücken zum Verteilen von Daten auf eine Vielzahl von Netzeinrichtungen. Zwar sind derartige lokale Datennetze WLAN auch ohne eine steuernde Netzeinrichtung betreibbar, wenn die angeschlossenen Stationen, insbesondere Hosts, Computer und dergleichen, über eine entsprechende Funktionalität zur Zugriffssteuerung verfügen, beim bevorzugten Ausführungsbeispiel weist jedoch das lokale Datennetz zur Vergabe von zeitweiligen Adressen gemäß dem Internetprotokoll IP einen sogenannten DHCP-Server auf. Dieser kann direkt an eine Netzleitung oder einen Zugriffsrouter AR (Access Router) angeschlossen oder Bestandteil von einem solchen sein. Weiterhin weist das lokale Datennetz Zugriffspunkte AP (Access Points) für den Zugriff von funkgestützten Stationen auf das lokale Datennetz auf. Derartige funkgestützte Stationen können Computer, Notebooks und dergleichen sein, die mit einer Funkschnittstelle ausgestattet sind, beispielsweise einer sogenannten NIC (Network Internet Card), also einer Netzzugangskarte. Die Kommunikation erfolgt somit von der Station über deren Netzzugangskarte NIC und die zu einem der Zugangspunkte AP aufgebaute Funkschnittstelle V1 auf das lokale funkgestützte Datennetz WLAN.

Als weitere Baueinheit weist das funkgestützte lokale Datennetz WLAN eine Netzschnittstelle NI (Network Interface) auf, die einen Zugang zu einem Kommunikationsnetz mit Internetzugriff ermöglicht. Die Netzschnittstelle kann dabei in vorteilhafter Weise an dem Zugriffsrouter AR angeschlossen oder ebenfalls in diesem integriert sein. Möglich ist aber auch eine Integration in irgendeinem anderen an dem lokalen Funk-Datennetz WLAN angeschlossenen Computer oder dergleichen.

Beim nachfolgend beschriebenen Verfahren zum losen Koppeln des lokalen Funk-Datennetzes WLAN an ein Mobilfunknetz, im dargestellten Ausführungsbeispiel ein Mobilfunknetz gemäß dem Standard GSM, wird auf weitere Einrichtungen und Funktionen zugegriffen. Dabei werden die Authentisierung und die Vergebührung sowohl voneinander als auch von einer direkten Kommunikation mit dem fremden Netz bzw. System GSM entkoppelt. Bei der unterhalb der bildlichen Netzdarstellung skizzierten Symboldarstellung ist die entsprechende Architektur eines bevorzugten lokalen Funk-Datennetz-Systems dargestellt, welches durch die Entkoppelung von Authentisierung und Vergebührung an unterschiedlichste Netze angekoppelt werden kann. Beispielhaft genannt sind neben Zugriffen auf das GSM Zugriffe auf PLMN HLR/HSS (Public Land Mobile Network; HLR: Home Location Register (Heimat-Ortsregister)/Home Subscriber System), elektronische Handelssysteme (eCommerce), ISP AAA (Internet Service Provider Authentication Authorisation Accounting), intelligente Mikrobezahlungs-Netzsysteme (IN Micropayment Systeme) usw.

Der Anschluss dieser verschiedenen Systeme bzw. Netze an das Datennetz WLAN erfolgt über eine Netzschnittstelle, die ein entsprechendes Schnittstellenmodul aufweist. Die übrigen schematisch dargestellten Blöcke können für die verschiedensten Fremdnetze bzw. Fremdsysteme unverändert verwendet werden. Dabei bestehen die generischen Bausteine aus einer Teilnehmerstation bzw. Teilnehmeranwendung, z. B. einem Notebook mit einer Funk-Netzkarte und einem Internetbrowser, einer Funkzugriffseinrichtung, z. B. einem Funk-Zugriffspunkt gemäß dem IEEE 802.11b-Standard, welcher an ein lokales Datennetz LAN angeschlossen ist, einer Zugriffssteuereinrichtung bzw. Zugriffssteuerfunktion, welche erkennt, ob ein Teilnehmer bereits authentisiert ist oder nicht und welche gegebenenfalls eine Authentisierung erzwingt, und einer Authentisierungsfunktion bzw. Authentisierungseinrichtung, welche die Authentisierung durchführt. Ferner kann eine Vergebührungsfunktion bzw. ein Vergebührungssystem, welches Vergebührungsinformati3on anhand der genutzten Zeit der Diensteinanspruchnahme, anhand der übertragenen Datenmenge oder anhand der Art des genutzten Dienstes teilnehmerabhängige Gebührendatensätze erstellt, bereitgestellt sein, wobei solche Funktionen und Systeme jedoch auch in der Netzschnittstelle aufgenommen sein können.

Die generischen Bausteine und Funktionen können sowohl bezüglich ihrer logischen Funktionen als auch hinsichtlich ihrer physikalischen Entitäten unverändert verwendet werden. Unter dem Begriff generisch ist somit insbesondere eine Einrichtung zu verstehen, die bezüglich ihrer physikalischen Bauart und ihrer logischen Funktion unverändert verwendet werden kann, unabhängig von einem fremden System, an das diese generische Einrichtung angeschlossen ist. Die einzelnen Einrichtungen und Funktionen können dabei als voneinander getrennte Einrichtungen bzw. Funktionen bereitgestellt werden, können Bestandteile anderer Netzeinrichtungen sein oder auch in einer nachfolgend als Diensteauswahl-Gateway SSG (Service Selection Gateway) bezeichneten Einrichtung zusammengefasst sein. Die Authentisierungsfunktion soll beim nachfolgend beschriebenen Ausführungsbeispiel durch einen Netzserver bzw. WEB-Server bereitgestellt werden.

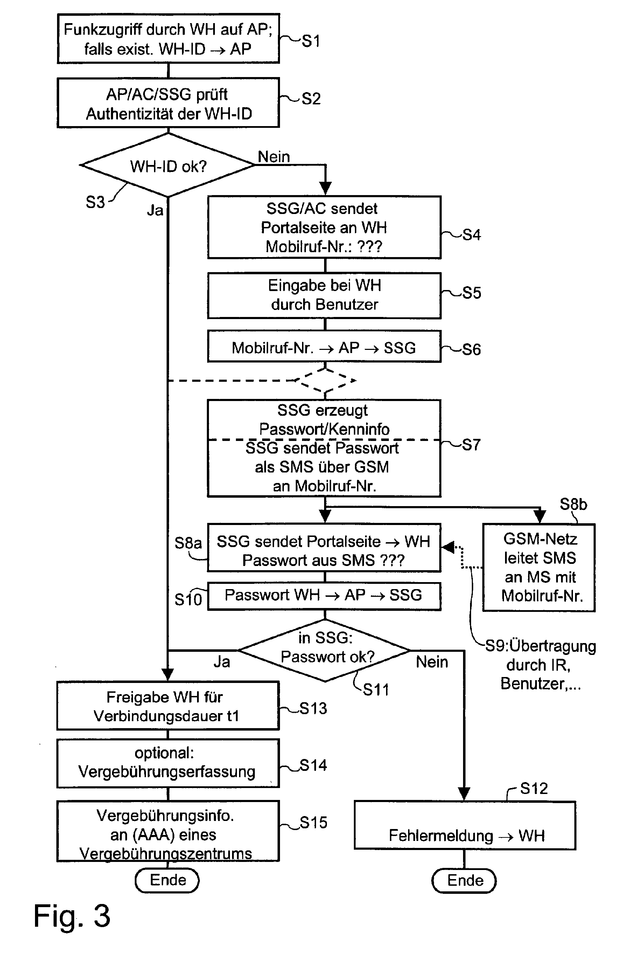

Der Verfahrensablauf bei einem Netzzugriff durch eine Station WH und die entsprechende Authentisierung dieser Station bzw. von dem dieser zugeordneten Benutzer wird auch mit Blick auf die Fig. 2 und 3 beschrieben. In einem ersten Schritt S1 bekommt die teilnehmerseitige Station WH über die Funkschnittstelle V1 einen Funkzugriff auf den Zugriffspunkt AP des lokalen Funk-Datennetzes WLAN, welches beispielsweise an einem Flughafen installiert ist. Nach der Zuweisung einer für die Station WH für Zugriffe zu verwendenden IP-Adresse (IP: Internet Protocol) durch den DHCP-Server gemäß standardisierten Funktionen f3ür lokale Datennetze, wird die Authentisierung dann eingeleitet, wenn zum ersten Mal unter Benutzung der IP-Adresse oder der Netzzugriffskarte eigenen, weltweit eindeutigen MAC-Adresse (MAC: Medium Access Control) auf einen Dienst, z.B. Internet-Zugang, zugegriffen wird.

Die Zugriffssteuerfunktion bzw. Zugriffs-Steuereinrichtung weist einen Speicher auf, in dem eine Liste geführt ist, welche IP-Adressen WH-IP bzw. MAC-Adressen WH-MAC bereits als authentisierte Teilnehmer bzw. authentisierte Teilnehmerstationen aufgeführt sind (Schritt S2).

Falls in einem Schritt S3 festgestellt wird, dass die überprüfte IP-Adresse WH-IP bzw. MAC Adresse WH-MAC zu einem bereits authentisierten Teilnehmer bzw. Teilnehmerendgerät gehören, wird der Zugriff auf die gewünschten Dienste, die mit Hilfe des oder von dem lokalen Datennetz angeboten werden, freigegeben. Andernfalls kann z.B. der Zugriff auf gebührenfreie, lokale Dienste, z.B. Abflugtabellen am Flughafen, beschränkt, oder jeglicher Datenzugriff unterbunden, oder eine erneute Authentisierung angereizt werden.

Für alle nicht authentisierten IP- oder MAC-Adressen wird von dem Diensteauswahl-Gateway SSG bzw. der darin befindlichen Zugriffs-Steuereinrichtung anstelle der gewünschten Internetseite eine Portalseite eingespielt, welche den Teilnehmer bzw. Betreiber der Station WH auffordert, eindeutige Identifizierungsmerkmale, z. B. Teilnehmername und Passwort, einzugeben. Diese Parameter werden zu einer Authentisierung herangezogen. Ist diese erfolgreich, so wird die Zugriffssteuerfunktion angewiesen, den Teilnehmer freizuschalten, d.h. ihm den Zugriff auf die gewünschte Internetseite zu gestatten, so dass dieser einen freien Zugang auf den gewünschten Dienst bzw. das Internet hat.

Bei dem Übersenden der Portalseite in einem Schritt S4 kann dabei neben oder anstelle der eindeutigen Identifizierungsmerkmale insbesondere auch eine Zugriffsnummer für ein Telefon, insbesondere Zellular-Telefon des Teilnehmers abgefragt werden. Nach Eingabe der Zugriffsnummer bzw. Telefonnummer (Mobilruf-Nr.) bei einem Schritt S5 durch den Teilnehmer bzw. Betreiber der Station WH wird die Identifizierungsnummer bzw. Telefonnummer über den Zugriffspunkt AP an das Diensteauswahl-Gateway SSG in einem Schritt S6 gesendet.

In einem folgenden Schritt S7 erzeugt das Diensteauswahl-Gateway für den Fall, dass mit den Angaben keine Authentisierung möglich ist, aber eine derartige Telefonnummer angegeben ist, ein Passwort. Das Passwort wird als Kenninformation über das entsprechende, zu der Telefonnummer zugeordnete Kommunikationsnetz an das entsprechende Telefon übermittelt. Anstelle eines Telefons können auch andere geeignete Datenendstationen verwendet werden, beispielsweise Faxgeräte. Wesentlich ist, dass die Kenninformation über ein Telekommunikationsnetz, Datennetz oder System übertragen wird, welches eine eindeutige und verläßliche Teilnehmerzuordnung zulässt, bei welchem also der angegebenen Telefonnummer eindeutig eine bestimmte Person als Teilnehmer oder als ein bestimmtes Datenendgerät zugeordnet ist. Nur diesem darf und kann die Kenninformation zugeleitet werden.

Beim dargestellten Ausführungsbeispiel wird die Kenninformation bei einem Schritt S8b über ein Telekommunikationsnetz als Kurznachricht SMS (Short Message Service) an eine mobile Station, insbesondere ein Zellulartelefon des GSM-Netzes mit der zugeordneten Mobilruf-Nr. MSISDN übermittelt. Parallel dazu wird vom Diensteauswahl-Gateway SSG in einem Schritt S8a eine Passwortanfrage als Portalseite an die Station WH gesendet.

Bei einem nächsten Schritt S9 liest der Teilnehmer von seinem Zellulartelefon die Kenninformation ab und gibt diese in seine Station WH ein. Nach einer Bestätigung wird in einem Schritt S10 die Kenninformation bzw. dieses Passwort von der Station WH über den Zugriffspunkt AP an das Diensteauswahl-Gateway SSG gesendet.

Im nächsten Schritt S11 wird in dem Diensteauswahl-Gateway SSG überprüft, ob die Kenninformation bzw. das Passwort mit dem ursprünglich erzeugten und abgesendeten Passwort übereinstimmt bzw. in zulässiger Form durch beispielsweise Verschlüsselungen verändert wurde. Falls nein, wird eine Fehlermeldung im Schritt S12 an die Station WH ausgegeben und der Ablauf beendet oder eine erneute Anforderung von Authentifizierungsinformationen beim Schritt S4 eingeleitet.

Falls beim Schritt S11 die Kenninformation in Ordnung ist, erfolgt beim Schritt S13 die Freigabe der Station WH für den gewünschten bzw. zugelassenen Zugriff auf spezielle Dienste und/oder das Internet. Dabei kann eine Beschränkung der Verbindungsdauer vorgesehen werden.

Optional kann auch eine Erfassung von Vergebührungsinformationen in einem Schritt S14 eingeleitet werden. Derartige Vergebührungsinformationen werden in einem Schritt S15 an einen entsprechenden Vergebührungsdienst z.B. einer dritten Partei oder des Betreibers des für die Authentisierung verwendeten Netzes bzw. Systems übermittelt (Schritt S15).

Bei der Auswahl des Passwortes bzw. der Kenninformation kann ein Zufallsverfahren verwendet werden, möglich ist aber auch die Verwendung eines Speichers mit einer großen Vielzahl von Begriffen, aus denen nach dem Zufallsprinzip jeweils ein Begriff ausgesucht und über das authentisierungsfähige Netz bzw. System übertragen wird.

Alternativ oder zusätzlich können Paßworte voreingerichtet sein, z.B. für Flughafenbedienstete am Flughafen, welche von Teilnehmern im Rahmen der Authentisierung entweder direkt eingegeben werden können, oder, um ihnen, z.B. im Falle des Vergessens, per SMS erneut zugeschickt werden zu können.

Kurz zusammengefasst gibt der Teilnehmer bzw. Betreiber einer an das lokale Funk-Datennetz WLAN anzuschließenden Station WH anstelle eines Passwortes seine Mobilrufnummer (MSISDN) in die Portalseite ein, die Authentisierungsfunktion erzeugt ein Passwort und schickt dieses als Kenninformation per Kurznachrichtendienst SMS an ein Mobilfunkterminal (GSM-Terminal). Der Teilnehmer überträgt das empfangene Passwort auf die Station und kann somit von der Authentisierungsfunktion im Diensteauswahl-Gateway SSG eindeutig authentisiert werden.

Auf diese Art und Weise hat der Betreiber des Datennetzes zwar nur eine Telefonnummer als eindeutige Zuordnungsmöglichkeit zu dem Teilnehmer, jedoch ist bei Bedarf, z.B. vom Stationsbenutzer falsch angegebenen persönlichen Adressdaten, über einen entsprechenden späteren Zugriff auf die Datenbanken des Telekommunikationssystems eine weitergehende Zuordnung zu dem Teilnehmer möglich. Dadurch wird der Teilnehmer letztendlich auf die heutzutage verlässlichste und vertrauenswürdigste Weise zugleich gegenüber der Authentisierungsfunktion des lokalen Funk-Datennetzes authentisiert. Außerdem ist es möglich, evtl. Vergebührungsinformationen über einen zwischengeschalteten Vergebührungsdienst, eine entsprechende Vergebührungsorganisation oder den Betreiber des Mobilfunknetzes gegenüber dem Teilnehmer in Rechnung zu stellen. Insbesondere muss lediglich ein Vertrauensverhältnis zwischen dem Authentisierungsserver und dem Telekommunikationsnetz, welches für die Authentisierung zwischengeschaltet wurde, nicht aber zwischen dem Teilnehmer und dem Betreiber des Datennetzes bestehen.

Als Vergebührungsorganisation bzw. Vergebührungsdienst kann auch ein sogenannter Wallet-Server zwischengeschaltet werden, welcher in Art eines Inkassobüros fungiert. Die Verwendung des Mobilfunksystems ist vorstehend lediglich ein Mittel zum Zweck der Authentisierung und soll keine andersartige Netzanbindung ausschließen.

Die Authentisierungs- und die Zugriffssteuerungsfunktion können physikalisch in einer Entität, z. B. einem Rechner, untergebracht sein, können aber auch getrennt in einer zentralen und/oder mehreren Satelliteneinrichtungen bereitgestellt sein. Dies ist in den Fig. durch die Aufteilung in einen WEB-Server i-noc zur Durchführung der Authentisierung und eine Zugriffseinrichtung i-sat mit der Zugriffs-Steuereinrichtung dargestellt. Die Funkzugriffseinrichtung und die Zugriffs-Steuereinrichtung erfassen unter anderem Informationen für Vergebührungen.

Falls die Authentisierungsfunktion in einer eigenständigen Einrichtung i-noc eingerichtet ist, kann eine solche Authentisierungseinrichtung i-noc auch mehrere Zugriffs-Steuereinrichtungen i-sat versorgen. Insbesondere ist es dann vorteilhaft, die Authentisierungseinrichtung i-noc an einem Ort nahe oder bei einem externen Netz mit zuverlässiger eigenständiger Authentisierungsfunktion oder beim Betreiber eines Vergebührungssystems, z.B. beim Betreiber eines Mobilfunknetzes GSM oder einem Broker zu installieren. Dies ermöglicht die Bereitstellung einer aufwendigen Authentisierungseinrichtung i-noc an einer zentralen Stelle und den Anschluss einer Vielzahl einfach aufgebauter und kostengünstiger Zugriffs-Steuereinrichtungen i-sat bei einzelnen lokalen Netzen WLAN oder Zugriffspunkten AP. Für die Verbindung zwischen getrennten Zugriffs-Steuereinrichtungen i-sat und einer Authentisierungseinrichtung i-noc wird zweckmäßigerweise eine sichere IP-basierte Verbindung gemäß z.B. RADIUS oder HTTP-S (Hypertext Transmission Protocol-Secure) aufgebaut.

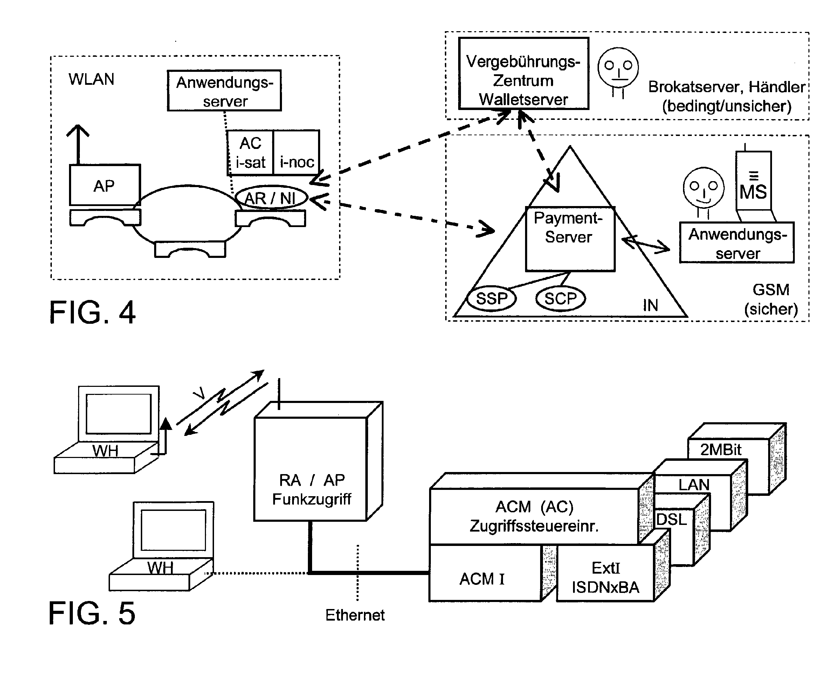

Neben der Übertragung von Vergebührungsinformationen an einen sogenannten Wallet-Server können die Vergebührungsinformationen auch direkt an den Betreiber beispielsweise eines für die Authentifizierung verwendeten Mobilfunknetzes übermittelt werden, wobei dort vorhandene Vergebührungs- bzw. Payment-Plattformen verwendet werden können. Letztere sind beispielsweise als intelligente Netzfunktionen für sogenannte Mikropayment-Lösungen existent. Unter Bezug auf Fig. 4 wird nachfolgend eine solche Vergebührung beschrieben.

Derzeit übliche Mobilfunknetze verfügen über ein intelligentes Netz (IN), mit Hilfe dessen sie sogenannte Hilfsdienstleistungen bzw. Supplementary Services für ihre Mobilfunkkunden anbieten können, z. B. Anrufweiterleitungen auf eine Sprachbox. Diese Systeme bestehen in der Regel aus einem Diensteschaltpunkt SSP (Service Switching Point) und einem Dienstesteuerpunkt SCP (Service Control Point). Ersterer erkennt beispielsweise an der gewählten Rufnummer, dass ein IN-Dienst gewünscht wird, letzterer erkennt den gewünschten Dienst, ermöglicht die Bereitstellung und Vergebührung desselben. Dienstesteuerpunkte SCP sind in der Regel auf Serverplattformen realisiert.

Mobilfunkbetreiber können nun Dritten Zugriff auf dieses in der Regel sehr komplexe System geben, wenn Dritte eigene Dienste anbieten und das Bezahlungssystem des Mobilfunkbetreibers als Art Inkassosystem nutzen möchten, woher der Begriff Mikropayment stammt. Dazu wird der Anschluss an eine Payment-Plattform bzw. einen Payment-Server bereitgestellt, wobei die Schnittstelle auf einem einfachen in der Regel IP-basierten Protokoll beruht, anstelle komplexe Protokolle gemäß beispielsweise CCS7 oder INAP zu verwenden. Bei einem solchen System tritt jedoch exakt das gleiche Vertrauensproblem auf, wie bei dem Stand der Technik. Falls der Verkäufer von Diensten bzw. Datennetzzugriffen sich an ein solches Vergebührungssystem anschließt und zugleich eine 100%ige Mobilfunkbetreiber-Tochtergesellschaft ist, so können Vergebührungsanforderungen seitens des Verkäufers akzeptiert werden. Der Verkäufer erhält dann im Payment-Server einen sogenannten Account. Handelt es sich jedoch um einen nicht vertrauenswürdigen Verkäufer, z. B. einen unbekannten Datennetzbetreiber, so wird in der Regel ein Wallet-Server zwischengeschaltet. Dieser kann nun Abrechnungen zusätzlich zu Banken oder vertrauenswürdigen Verkäufern direkt an das Bezahlungssystem bzw. Vergebührungssystem des Mobilfunkbetreibers übermitteln.

Um dies zu ermöglichen, wird der WEB-Server bei vorstehendem Ausführungsbeispiel durch eine entsprechende erweiterte Netzschnittstelle ergänzt. Dadurch können Vergebührungsinformationen in entsprechenden Nachrichten des Mobilfunk-Inkassosystems eingearbeitet übermittelt werden.

Um das Ende der Vergebührung ermitteln zu können, kann beispielsweise eine Aufschaltung auf IN-Dienste, beispielsweise einen Wetterdienst, erfolgen, welche eine Zeitüberwachung ermöglichen.

Mit Hilfe der vorstehend beschriebenen Verfahrensweise und Vorrichtungen kann ein funkgestütztes lokales Datennetz autonom Authentisierungen von angeschlossenen Stationen bzw. diesen zugeordneten Teilnehmern durchführen, wobei Authentisierungsinformationen von unterschiedlichsten Netzen und Systemen mit entsprechend sicheren Authentisierungsmöglichkeiten verwendet werden können. Ein Mobilfunkbetreiber kann fremde Anbieter lokaler Datennetze an sein Vergebührungs- bzw. Bezahlungssystem anschließen und so mit minimalem Aufwand seinen eigenen Mobilfunkkunden Zugriffe auf lokale Datennetze anbieten, ohne gezwungen zu sein, selber Zugriffspunkte und Datennetze bereit zu stellen. Ferner kann ein Mobilfunkbetreiber seinen Kunden selbst an Orten einen Zugriff auf lokale Datennetze verschaffen, wo dieser Dienst bereits von einem anderen, Dritten angeboten wird, indem er diesem die erforderlichen Einrichtungen und Softwarefunktionen verkauft oder schenkt. Weiterhin können dritte Betreiber, z. B. sogenannte Content-Provider motiviert werden, selber Zugriffsmöglichkeiten auf funkgestützte lokale Datennetze anzubieten, da diese die Möglichkeit der Authentisierung und damit des Inkassos eines Mobilfunknetzes mit ausnutzen können.

Wie aus Fig. 5 ersichtlich, besteht ein besonders bevorzugter Funk-Zugriffspunkt aus einer modularen Einrichtung. Ein Funkteil dient zum Anschluss fremder funkgestützter Stationen an ein lokales Funk-Datennetz gemäß z.B. dem Ethernet-Standard. An der Ethernet-Leitung ist auch ein Modemteil angeschlossen. Das Modemteil weist die Einrichtungen und Funktionen des Diensteauswahl-Gateways auf, d.h. die Zugriffs-Steuereinrichtung und -funktion, einen Verbindungs- bzw. Anschlussabschnitt und modular austauschbare Schnittstelleneinrichtungen zum Anschluss an ein fremdes Kommunikationssystem oder -netz. Eine derart aufgebaute modulare Einrichtung versteckt die Dienstefunktionalität, sieht wie ein Modem aus und bietet, je nach baulicher Ausführung, Anschlussmöglichkeiten an eine Vielzahl verschiedenartigster Kommunikationssysteme und -netze, wie z.B. ISDN oder DSL. Die letztgenannten Anschlussmöglichkeiten dienen zur vorstehend beschriebenen Authentisierung, aber auch zum Bereitstellen eines Internetzugangs oder sonstiger pyhsikalischer Verbindungen zwischen den verschiedenartigen Systemen. Anschließbar sind an die externe Schnittstelle somit die verschiedensten Netztypen, wobei der Zugang zum Versenden von Kurznachrichten SMS zu einem Mobilfunkgerät des GSM-Netzes z.B. über eine 2 MBit-Leitung eines zwischengeschalteten sogenannten IP-backbones erfolgen kann.

## Patentansprüche

1. Verfahren zum authentisierten Zugriff durch eine zu einem Datennetz (WLAN) kompatible Station (WH), bei dem
- der Zugriff der Station auf einen Zugriffspunkt (AP) für ein derartiges Datennetz (WLAN) erfolgt (S1),
- die Station (WH) eine Identifizierungsinformation (Mobilruf-Nr.) an den Zugriffspunkt (AP) übermittelt (S4),
- Zugriffspunkt-seitig oder netzseitig eine Kenninformation (Passwort) bereitgestellt und mittels einer Schnittstelle (SSG, AR, NI) zu einer authentisierten Einrichtung (MS) eines Zugriffspunkt-fremden Systems bzw. Netzes (GSM) mit Authentisierungsfunktion übertragen wird (S7, S8b), wobei die Identifizierungsinformation (Mobilruf-Nr.) der in dem externen System bzw. Netz (GSM) authentisierten Einrichtung (MS) direkt zugeordnet ist und insbesondere Zugriff auf Daten der authentisierten Einrichtung (MS) am Ort der Station (WH) oder des Zugriffspunkts (AP) verfügbar ist,
- die zur authentisierten Einrichtung (MS) gesendete Kenninformation (Passwort) auf die Station (WH) übertragen wird,
- die Station (WH) die Kenninformation zum Zugriffspunkt (AP) übermittelt,
- eine Zugriffspunkt-seitige oder netzseitige Instanz (SSG) die übermittelt mit der gesendeten Kenninformation (Passwort) vergleicht und,
- falls der Vergleich positiv ist, der Zugriff der Station (WH) auf bestimmte oder alle Zugriffspunkt-seitigen oder netzseitigen Dienste und Funktionen freigegeben wird.

2. Verfahren nach Anspruch 1, bei dem
die Kenninformation (Passwort) in der oder einer weiteren Zugriffspunkt-seitigen oder netzseitigen Instanz (SSG) zufällig erzeugt oder zufällig aus einer Liste mit einer Vielzahl von vorgegebenen Passworten ausgewählt wird.

3. Verfahren nach Anspruch 1 oder 2, bei dem
die Übertragung der Kenninformation (Passwort) mittels eines Kurznachrichten-Dienstes (SMS) durchgeführt wird.

4. Verfahren nach einem vorstehenden Anspruch, bei dem
die Übertragung der Kenninformation (Passwort) durch eine indirekte Ausnutzung von Authentisierungsfunktionen (AAA) in dem Zugriffspunkt- bzw. Datennetz-externen System bzw. Netz (GSM) mit der authentisierten Einrichtung (MS) durchgeführt wird.

5. Verfahren nach einem vorstehenden Anspruch, bei dem
als die authentisierte Einrichtung (MS) des Zugriffspunkt- bzw. Datennetz-externen Systems bzw. Netzes eine Mobilfunkstation (MS) oder eine Teilnehmeridentifizierungskarte (SIM) eines zellularen Mobilfunksystems (GSM) verwendet wird.

6. Vergebührungsverfahren, insbesondere nach einem vorstehenden Anspruch, bei dem
nach einer Authentisierung einer zu einem Datennetz (WLAN) kompatiblen Station (WH), die auf einen datennetztypischen Zugriffspunkt (AP) zugreift, Zugriffspunkt-seitig oder in einem Zugriffspunkt-seitigen Datennetz (WLAN) durch die oder eine eigenständige Instanz (SSG; i-sat) vergebührungsrelevante Daten beim Zugriff der Station (WH) auf den Zugriffspunkt (AP), auf das Datennetz (WLAN) und/oder auf bestimmte darüber zugreifbare Dienste erfasst werden.

7. Vergebührunsverfahren nach Anspruch 6, bei dem
in einer ersten Vergebührungseinrichtung (i-sat) Vergebührungsgrundinformationen erfasst und an eine zweite Vergebührungseinrichtung (i-noc) übermittelt werden, welche aus den Vergebührungsgrundinformationen zu verrechnende Gebühren bestimmt.

8. Vergebührungsverfahren nach Anspruch 6 oder 7, bei dem
die vergebührungsrelevanten Daten an eine externe Vergebührungsinstanz eines Dritten oder eine Vergebührungseinrichtung (AAA) eines für die Authentisierung zwischengeschalteten Zugriffspunkt-externen bzw. Datennetz-externen Systems bzw. Netzes (GSM) weitergeleitet werden, wobei entweder der Dritte bzw. die Vergebührungseinrichtung nicht in die Authentisierung eingebunden sind oder die Authentisierung vom Vergebührungsverfahren unabhängig autonom zwischen Station (WH) und Zugriffspunkt (AP) oder einer Zugriffspunkt-seitigen Instanz (SSG) durchgeführt wird.

9. Vergebührungsverfahren nach Anspruch 6, 7 oder 8, bei dem Vergebührungsinformationen einer vergebührungsrelevanten Verbindung als Vergebührungszugriffe auf ein IN-basiertes Bezahlungs- (Payment-) System erfolgen.

10. Datennetz oder funkgestütztes Datennetz (WLAN) mit
- zumindest einem schnittstellenartigen Zugriffspunkt (AP) für einen Zugriff durch teilnehmerseitige Datennetz-kompatible Stationen (WH) auf das Datennetz,
- einer Zugriffssteuereinrichtung (SSG) mit einem Authentisierungsspeicher, in dem berechtigte Stationen (WH) registriert sind,
- einer ersten externen Netzschnittstelle (NI) für einen Zugriff des Datennetzes (WLAN) auf ein externes, datennetzinkompatibles System oder Netz (GSM),
**gekennzeichnet durch**
- die Zugriffssteuereinrichtung (SSG), die zum Erzeugen einer Kenninformation und Aussenden dieser über das externe System bzw. Netz (GSM) eingerichtet ist, und
- eine Übertragungseinrichtung zum Übertragen der über das externe Netz bzw. System auf eine authentifizierte Einrichtung (MS) dieses externen Netzes bzw. Systems übertragenen Kenninformation (Passwort) auf die Station (WH) und über diese zur Authentisierung der Station (WH) an die Zugriffssteuereinrichtung (SSG).

11. Modem oder Zugriffspunkt (AP), insbesondere Zugriffspunkt (AP) nach einem vorstehenden Anspruch für einen Zugriff durch teilnehmerseitige Datennetz-kompatible Stationen (WH) auf ein Datennetz (WLAN), mit
- einer Datennetz-typischen Schnittstelle (ACMI, Ethernet) ,
- zumindest einer weiteren Schnittstelle (ExtI) für einen Zugriff auf ein Datennetz-externes Netz oder System (GSM) und
- einer Zugriffssteuereinrichtung (ACM; SSG) zum eigenständigen Prüfen des Authentisierungsstatus der Station (WH) und bei nicht ausreichender Authentisierung zum Veranlassen einer Authentisierung der Station (WH).

12. Modem oder Zugriffspunkt (AP) nach Anspruch 11 mit modularem Aufbau, bei dem
die Zugriffsteuereinrichtung bei nicht ausreichender Authentisierung entweder zum Herstellen einer Verbindung zu einer getrennten Authentisierungseinrichtung oder zum eigenständigen Durchführen der Authentisierung ausgebildet ist.

13. Modem oder Zugriffspunkt (AP) nach Anspruch 11 oder 12, mit modularem Aufbau, bei dem
die Datennetz-typische Schnittstelle (ACMI, AP; Ethernet) entweder zum Anschluss eines Datennetzes (WLAN) mit einer der Stationen oder zum direkten Anschluss einer der Stationen (WH) ausgebildet ist.

14. Modem oder Zugriffspunkt (AP) nach Anspruch 11, 12 oder 13 mit modularem Aufbau, bei dem
die zumindest eine weitere Schnittstelle (ExtI) als nachrüstbares oder austauschbares Modul ausgebildet ist, das an ein bestimmtes Datennetz-externes Netz oder System (GSM) angepasst ist.

15. Modem oder Zugriffspunkt (AP) nach einem der Ansprüche 11 - 14, bei dem die Zugriffssteuereinrichtung
- zum Erzeugen einer Kenninformation nach Erhalt einer Identifizierungsinformation (Mobilruf-Nr., MSISDN) über die Schnittstelle vom Datennetz und
- zum Aussenden der Kenninformation (Passwort) über die Schnittstelle zum externen Netz bzw. System (GSM) und
- zum späteren Empfangen der über das externe Netz bzw. System übertragenen Kenninformation (Passwort) über das lokale Datennetz (WLAN) und
- zum Vergleichen der ausgesendeten und empfangenen Kenninformation (Passwort) zum Entscheiden der Freigabe von Zugriffen auf das Datennetz (WLAN) ausgebildet ist.

16. Datennetz bzw. Funk-Datennetz (WLAN) nach Anspruch 11 bzw. Modem oder Netzzugriffseinrichtung (AP) nach einem der Ansprüche 12 - 15, wobei
die Zugriffssteuereinrichtung (SSG) alle für die Authentisierung erforderlichen Einrichtungen und Funktionen sowie ein Schnittstellenmodul (ExtI) aufweist, wobei das Schnittstellenmodul als modulare Einrichtung zum Anschluss an zumindest ein Datennetz-fremdes Kommunikationssystem bzw. - Netz (GSM) mit sicherer Authentisierung ausgelegt ist.

17. Authentisierungs- und/oder Vergebührungssystem für ein Datennetz (WLAN), insbesondere in Verbindung mit einem Verfahren, System oder einer Vorrichtung gemäß einem vorstehenden Anspruch, bei dem
- eine Datennetz-kompatible Station (WH) auf das Datennetz (WLAN) zugreift,
- Datennetz-seitig eine Authentisierung der Station (WH) derart autonom überprüft und veranlasst wird, dass eine direkte oder indirekte Zuordnung zu einer authentisierten Einrichtung (MS) oder einem authentisierten Teilnehmer eines Datennetz-externen Systems oder Netzes (GSM) ermöglicht wird.

18. Authentisierungs- und/oder Vergebührungssystem für ein Datennetz (WLAN), insbesondere in Verbindung mit einem Verfahren, System oder einer Vorrichtung gemäß einem vorstehenden Anspruch, bei dem
- eine Datennetz-kompatible Station (WH) auf das Datennetz (WLAN) zugreift,
- von dem Datennetz eine Kenninformation (Passwort) über ein Datennetz-externes System oder Netz (GSM) zu einer datennetzfremden authentisierten Station (MS) des externen Systems bzw. Netzes (GSM) gesendet wird,
- die Kenninformation von der authentisierten Station (MS) auf die Station (WH) übertragen und von dieser an das Datennetz (WH) weiterübertragen wird und
- im Datennetz zur indirekten Authentisierung ein Vergleich der gesendeten und der empfangenen Kenninformation durchgeführt wird.

19. Vergebührungs- und Authentisierungssystem nach Anspruch 17 oder 18 für ein Datennetz, bei dem
- eine erste Authentisierung von dem System (WLAN, SSG), in dem Gebühren anfallen, hinsichtlich der Authentizität einer auf das Datennetz (WLAN) zugreifenden Datennetz-kompatiblen Station (WH) und
- eine zweite Authentisierung hinsichtlich der Authentizität des Systems, in dem Gebühren anfallen, gegenüber einem Vergebührungsdaten empfangenden weiteren System (GSM) veranlasst wird.

20. Vergebührungssystem für ein Datennetz (WLAN) in Verbindung mit einem Verfahren, System oder einer Vorrichtung gemäß einem vorstehenden Anspruch, bei dem
vom Datennetz (WLAN) Vergebührungsinformationen zu einer zugreifenden Station (WH) zur Vergebührung an eine Datennetzfremde Einrichtung gesendet werden, wobei eine Vergebührung unabhängig von der Authentisierung der Station (WH) durchgeführt wird.

21. Vergebührungssystem für ein Datennetz (WLAN) oder für einen Zugriffspunkt (AP) für eine Datennetz-kompatible Station (WH), insbesondere in Verbindung mit einem Verfahren, System oder einer Vorrichtung gemäß einem vorstehenden Anspruch, bei dem
- ein Diensteanbieter einen Zugriff für eine Datennetz-kompatible Station (WH) anbietet und
- eigenständig eine Authentisierung der zugreifenden Datennetz-kompatiblen Station (WH) anreizt oder durchführt und
- Vergebührungsdaten an eine Vergebührungseinrichtung eines fremden Systems oder an eine Vergebührungsorganisation übermittelt.
